(19) Europäisches Patentamt
European Patent Office
Office européen des brevets

(11) **EP 4 769 521 A1**

(12) **EUROPEAN PATENT APPLICATION**

(43) Date of publication:
**01.07.2026 Bulletin 2026/27**

(51) International Patent Classification (IPC):
$H01M\ 4/131^{(2010.01)}$       $C01G\ 53/04^{(2025.01)}$
$H01M\ 4/36^{(2006.01)}$       $H01M\ 4/525^{(2010.01)}$
$H01M\ 4/58^{(2010.01)}$       $H01M\ 10/0525^{(2010.01)}$
$H01M\ 4/136^{(2010.01)}$

(21) Application number: **25225719.1**

(22) Date of filing: **19.12.2025**

(52) Cooperative Patent Classification (CPC):
**H01M 4/364; C01G 53/04; H01M 4/131;
H01M 4/136; H01M 4/525; H01M 4/5825;
H01M 10/0525;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 KR 20240202846
18.12.2025 KR 20250203876**

(71) Applicant: **SAMSUNG SDI CO., LTD.**
**Yongin-si, Gyeonggi-do 17084 (KR)**

(72) Inventors:
• **Kang, Minchul**
**17084 Yongin-si, Gyeonggi-do (KR)**

• **Kim, Sangmi**
**17084 Yongin-si, Gyeonggi-do (KR)**
• **Doo, Sungwook**
**17084 Yongin-si, Gyeonggi-do (KR)**
• **Kang, Gwiwoon**
**17084 Yongin-si, Gyeonggi-do (KR)**
• **Lee, Soonrewl**
**17084 Yongin-si, Gyeonggi-do (KR)**
• **Kim, Young-Ki**
**17084 Yongin-si, Gyeonggi-do (KR)**

(74) Representative: **Meissner Bolte Partnerschaft
mbB**
**Patentanwälte Rechtsanwälte
Postfach 86 06 24
81633 München (DE)**

(54) **POSITIVE ELECTRODE ACTIVE MATERIALS, POSITIVE ELECTRODES, AND RECHARGEABLE LITHIUM BATTERIES**

(57)    Disclosed are a positive electrode active material, a positive electrode, and a rechargeable lithium battery. The positive electrode active material includes a first positive electrode active material including a lithium iron phosphate-based compound, a second positive electrode active material including a lithium nickel based composite oxide, and an irreversible positive electrode additive. A weight ratio (a/b) of the first positive electrode active material (a) to the second positive electrode active material (b) is about 1.5 to about 8.5. The irreversible positive electrode additive is included in an amount of about 0.1 wt% to about 1.9 wt% based on 100 wt% of the positive electrode active material.

FIG. 1

EP 4 769 521 A1

**Description**

**BACKGROUND**

**1. Field**

Disclosed herein are positive electrode active materials, positive electrodes, and rechargeable lithium batteries.

**2. Description of the Related Art**

Typically, a portable information device such as a cell phone, a laptop, smart phone, and the like uses a rechargeable lithium battery having high energy density and easy portability as a driving power source. Rechargeable lithium batteries are also used in electric vehicles. Recently, new research has been actively conducted to use a rechargeable lithium battery with high energy density as a driving power source for hybrid or electric vehicles or a power storage power source.

In addition, in order to achieve enlargement and mass production of the rechargeable lithium battery, there is an increasing demand for a new positive electrode active material having safety and reliability as well as high performance. An example of new positive electrode active material is a lithium iron phosphate-based positive electrode active material that is structurally stable, has high heat resistance, and is abundant in raw materials. Recently lithium iron phosphate-based positive electrode active material has attracted attention.

However, the lithium iron phosphate-based positive electrode active material has disadvantages of low capacity (e.g., initial charge/discharge capacity (i.e., initial charge capacity and initial discharge capacity)) and low energy density. In order to commercialize this positive electrode active material and other such materials, there is a need to improve the initial charge/discharge capacity, initial charge/discharge efficiency (i.e., initial efficiency), cycle-life characteristics, and energy density characteristics, while being able to operate at a high voltage.

**SUMMARY**

Provided are positive electrode active materials, positive electrodes, and rechargeable lithium batteries that are capable of operating at high voltages while ensuring price competitiveness, and further have improved initial charge/discharge capacity, initial charge/discharge efficiency, cycle-life characteristics, and energy density characteristics.

The present invention provides a positive electrode active material including a first positive electrode active material including a lithium iron phosphate-based compound, a second positive electrode active material including a lithium nickel-based composite oxide, and an irreversible positive electrode additive, wherein a weight ratio (a/b) of the first positive electrode active material (a) to the second positive electrode active material (b) is within a range of about 1.5 to about 8.5, and the irreversible positive electrode additive is included in an amount of about 0.1 wt% to about 1.9 wt% based on 100 wt% of the positive electrode active material.

The present invention further provides a positive electrode including a positive electrode current collector, and a positive electrode active material layer disposed on the positive electrode current collector, the positive electrode active material layer further including the aforementioned positive electrode active material.

The present invention also provides a rechargeable lithium battery including the aforementioned positive electrode, a negative electrode, and an electrolyte.

The positive electrode active material, according to some example embodiments, may secure price competitiveness, operate at high voltage, and have improved initial charge/discharge capacity, initial charge/discharge efficiency, cycle-life characteristics, and energy density characteristics.

**BRIEF DESCRIPTION OF THE DRAWINGS**

FIG. 1 is schematic view of a cylindrical battery.
FIG. 2 is schematic view of a prismatic battery.
FIG. 3 is schematic view of a first example of pouch-shaped battery.
FIG. 4 is schematic view of a second example of a pouch-shaped battery.

**DETAILED DESCRIPTION**

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the size (e.g., thickness) of layers, films, panels, regions, etc., are exaggerated for clarity and like reference numerals designate like elements throughout the specification. It will be understood that when an element such as a layer, film, region, or substrate is referred to as being "on" another element such as a layer, film, region, or substrate, it can be directly on the other element such as a layer, film, region, or substrate or intervening elements may also be present. In contrast, when an element such as a layer, film, region, or substrate is referred to as being "directly on" another element such as a layer, film, region, or substrate, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter by measuring particle sizes using a dynamic light scattering method, performing data analysis, counting the number of particles for each particle size range, and calculating, from this, the average particle diameter. Unless otherwise defined, the average particle diameter ($D_{50}$) may mean the diameter of particles having a cumulative volume of 50 vol% in the particle size distribution. As used herein, when a definition is not otherwise provided, the average particle diameter ($D_{50}$) means a diameter of particles having a cumulative volume of 50 vol % in the particle size distribution that is obtained by measuring the size (diameter or major axis length) of about 20 particles at random in a scanning electron microscope image.

Here, "or" is not to be construed as an exclusive meaning. For example, "A or B" is construed to include A, B, A+B, and the like.

"Metal" is interpreted as a concept including ordinary metals, transition metals and metalloids (semi-metals).

**Positive Electrode Active Material**

The positive electrode active material includes a first positive electrode active material including a lithium iron phosphate-based compound, a second positive electrode active material including a lithium nickel-based composite oxide, and an irreversible positive electrode additive, wherein a weight ratio (a/b) of the first positive electrode active material (a) to the second positive electrode active material (b) is about 1.5 to about 8.5, and the irreversible positive electrode additive is included in an amount of about 0.1 wt% to about 1.9 wt% based on 100 wt% of the positive electrode active material.

The lithium iron phosphate-based compound has excellent structural stability, high heat resistance, price competitiveness, and is drawing attention as of late. However, if the lithium iron phosphate-based compound is used alone, this may cause disadvantages of relatively low operation voltage, as well as deteriorated efficiency (e.g., initial charge/discharge efficiency) characteristics and energy density.

The positive electrode active material, according to some example embodiments, is prepared by mixing the lithium iron phosphate-based compound with a lithium nickel-based composite oxide capable of implementing high capacity, a high energy density, and an irreversible positive electrode additive capable of effectively compensating for lithium ion loss due to a negative electrode material. This thereby increases an operation voltage and improves efficiency characteristics, cycle-life characteristics, and energy density.

In particular, the positive electrode active material, according to some example embodiments, is to control a weight ratio (a/b) of the first positive electrode active material to the second positive electrode active material and an addition amount of the irreversible positive electrode additive within an optimal range. This, thereby, provides a rechargeable lithium battery having overall excellent initial charge/discharge capacity, efficiency thereof, cycle-life characteristics, and energy density, while increasing an operation voltage.

The weight ratio (a/b) of the first positive electrode active material (a) to the second positive electrode active material (b) may be within ranges of about 1.8 to about 8, about 2 to about 7.5, about 2.4 to about 7, about 3 to about 6.5, about 3.5 to about 6, about 3.7 to about 5, or about 3.9 to about 4.5. If the weight ratio (a/b) of the first positive electrode active material (a) to the second positive electrode active material (b) satisfies the ranges, price competitiveness may not only be secured, but also initial charge/discharge capacity, its efficiency, cycle-life characteristics, a capacity retention rate, and energy density may be overall improved. On the one hand, if the weight ratio is less than about 1.5, the first positive electrode active material may be included in an extremely small amount relative to that of the second positive electrode active material, thereby achieving equivalent or excellent initial charge/discharge capacity and energy density. But an amount of the second positive electrode active material, which is expensive, may be increased, thereby failing in securing price competitiveness and thereby deteriorating efficiency (e.g., initial charge/discharge efficiency). On the other hand, if the weight ratio is greater than 8.5, the first positive electrode active material may be included in an extremely large amount relative to that of the second positive electrode active material, resulting in deteriorating initial charge/discharge capacity and failing in satisfying powder characteristics. This thereby extremely deteriorates energy density.

The irreversible positive electrode additive may be included in an amount of about 0.15 wt% to about 1.8 wt%, about 0.2 wt% to about 1.7 wt%, about 0.3 wt% to about 1.6 wt%, or about 0.5 wt% to about 1.5 wt% based on 100 wt% of the positive electrode active material. If the amount of the irreversible positive electrode additive (which is based on 100 wt%) of the positive electrode active material satisfies the ranges, charging and discharging capacity may be improved, and simultaneously, powder characteristics may not be deteriorated. This thereby enables securing energy density and exhibiting excellent efficiency. If the irreversible positive electrode additive is included in an amount of less than about 0.1 wt% based on 100 wt% of the positive electrode active material, the capacity retention rate may be sharply deteriorated. But if the irreversible positive electrode additive is included in an amount of greater than about 1.9 wt% based on 100 wt% of the positive electrode active material, the irreversible positive electrode additive may be more included to secure excellent capacity retention rate. However, including more of the irreversible positive electrode additive may cause the weight of the first and second positive electrode active materials to be relatively reduced, thereby deteriorating charging/ discharging efficiency, and not satisfying the targeted powder characteristics.

Hereinafter, specific details are described regarding the first positive electrode active material, the second positive electrode active material, and the irreversible positive electrode additive included in the positive electrode active material.

First Positive Electrode Active Material

The first positive electrode active material includes a lithium iron phosphate-based compound.

The lithium iron phosphate-based compound may be represented by, for example, Chemical Formula 1 or Chemical Formula 2.

$$[\text{Chemical Formula 1}] \qquad Li_{a1}Fe_{(1-x1)}M^1_{x1}PO_4$$

In Chemical Formula 1, $0.9 \leq a1 \leq 1.5$, $0 \leq x1 \leq 0.4$, and $M^1$ is Al, Ca, Ce, Cr, Cu, La, Mg, Mn, Mo, Nb, Ni, Sn, Sr, Ti, V, W, Y, Zn, Zr, or a combination thereof. Here, $0.90 \leq a1 \leq 1.5$, for example $0.90 \leq a1 \leq 1.2$, or $0.95 \leq a1 \leq 1.1$. Additionally, $0 \leq x1 \leq 0.4$, $0 \leq x1 \leq 0.3$, $0 \leq x1 \leq 0.2$, $0 \leq x1 \leq 0.1$, or $0 \leq x1 \leq 0.05$.

$$[\text{Chemical Formula 2}] \qquad Li_{a2}Mn_{x2}Fe_{(1-x2-y2)}M^2_{y2}PO_4$$

In Chemical Formula 2, $0.9 \leq a2 \leq 1.5$, $0.1 \leq x2 \leq 0.9$, $0 \leq y2 < 0.9$, and $M^2$ is Al, Ca, Ce, Cr, Cu, La, Mg, Mo, Nb, Ni, Sn, Sr, Ti, V, W, Y, Zn, Zr, or a combination thereof. Here, $0.90 \leq a2 \leq 1.5$, for example $0.90 \leq a2 \leq 1.2$, or $0.95 \leq a2 \leq 1.1$. Additionally, $0.1 \leq x2 \leq 0.9$, $0.3 \leq x2 \leq 0.9$, or $0.4 \leq x2 \leq 0.8$, $0 \leq y2 \leq 0.4$, $0 \leq y2 \leq 0.3$, $0 \leq y2 \leq 0.2$, $0 \leq y2 \leq 0.1$, or $0 \leq y2 \leq 0.05$.

For example, the lithium iron phosphate-based compound may include $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

For example, in Chemical Formula 1, $M^1$ and $M^2$ may include Al, Mg, Ti, V, or a combination thereof.

The first positive electrode active material is in a form of particles, and may be in a form of first particles, second particles, or a mixture thereof.

The first particles may include secondary particles formed by agglomeration of a plurality of primary particles. The secondary particles may be an aggregation of the primary particles and may have a spherical or ellipsoidal shape. The secondary particles may become spherical or ellipsoidal shapes as the primary particles are closely agglomerated with each other. The secondary particles may be expressed as an assembly. The average particle diameter ($D_{50}$) of the secondary particles of the first particles may be, for example, about 5 $\mu$m to about 20 $\mu$m, about 6 $\mu$m to about 20 $\mu$m, or about 6 $\mu$m to about 15 $\mu$m. Furthermore, the average particle diameter ($D_{50}$) of the secondary particles of the first particles may be larger than the average particle diameter ($D_{50}$) of the single particles of the second particle, as described later. The average particle diameter ($D_{50}$) of the primary particles forming the secondary particles of the first particles may be about 0.1 $\mu$m to about 2 $\mu$m, about 0.1 $\mu$m to about 1.2 $\mu$m, or about 0.5 $\mu$m to about 0.9 $\mu$m, and for example, may be less than or equal to about 500 nm, and for example, may be about 100 nm to about 400 nm, about 100 nm to about 300 nm, or about 100 nm to about 200 nm.

The average particle diameter ($D_{50}$) of the secondary particles of the first particles may be, for example, obtained by randomly selecting about 30 first particles from an electron microscope image of the first positive electrode active material, measuring the particle diameters, and taking the diameter of the particles having a cumulative volume of 50 vol% of the particle size distribution as the average particle diameter ($D_{50}$). The average particle diameter of the primary particles forming the secondary particles of the first particles may be determined by measuring the size of about 30 primary particles in an electron microscope image of the surface or cross-section of the first particles , and the diameter of particles with a cumulative volume of 50 vol% in the particle size distribution may be taken as the average particle diameter ($D_{50}$).

The secondary particles of the first particles may include pores therein. The secondary particles may also have a level of porosity of about 20% to about 50%. The porosity may be obtained by measuring a ratio of the area occupied by the pores within the secondary particle to the cross-sectional area of the secondary particle using an image analysis program Image J, for example, from a scanning electron microscope image of the cross-section of the first particles.

The second particles may have a form of single particles. The average particle diameter ($D_{50}$) of the single particles of the second particles may be about 100 nm to about 7 $\mu$m, and may be, for example, about 200 nm to about 5 $\mu$m, about 300 nm to about 3 $\mu$m, or about 400nm to about 2 $\mu$m. The average particle diameter ($D_{50}$) of the second particles may be smaller than the average particle diameter ($D_{50}$) of the secondary particles of the first particles, and may be equal to or larger than the average particle diameter ($D_{50}$) of the primary particles forming the secondary particles of the first particles. For example, the average particle diameter of the second particles may be obtained by randomly selecting about 30 second particles from an electron microscope image of the first positive electrode active material, measuring the particle sizes, and taking the diameter of the particles having a cumulative volume of 50 vol% in the particle size distribution as the average particle diameter ($D_{50}$).

When the first positive electrode active material is a mixed form of first particles and second particles, a weight ratio of the first particles and the second particles is not specifically limited. But for the sake of example, based on 100 wt% of the first positive electrode active material, an amount of the first particles may be about 10 wt% to about 80 wt% and an amount of the second particles may be about 20 wt% to about 90 wt%, an amount of the first particles may be about 30 wt% to about 80 wt% and an amount of the second particles may be about 20 wt% to about 70 wt%, or an amount of the first particles may be about 40 wt% to about 60 wt% and an amount of the second particles may be about 40 wt% to about 60 wt%. When the amount of the first particles and the second particles satisfies the above range based on 100 wt% of the first positive electrode active material, the density of the powder itself may be increased by improving the filling rate through an appropriate ratio of the first particles and the second particles. And thus, the energy density may be improved.

For example, the first positive electrode active material may be composed only of second particles.

The first positive electrode active material may further include a carbon coating layer on the surface of the secondary particles, the surface of the primary particles forming the secondary particles, and/or the surface of the single particles. The carbon coating layer can improve the electrical conductivity of the first positive electrode active material and reduce the resistance of the positive electrode. The carbon coating layer may be formed using at least one carbon raw material selected from, for example, glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch resin, and a tar resin. For example, the carbon coating layer may be formed by arranging the carbon raw materials on the surface of the first positive electrode active material particles and then performing a heat-treating process. For example, the carbon raw material and the primary particles can be mixed and heat-treated to form a carbon coating layer on the surface of the primary particles. Then, secondary particles, in which the primary particles are agglomerated, may be prepared through a post-process, or the carbon raw material and the secondary particles may be mixed and heat-treated to form a carbon coating layer on the surface of the secondary particles.

The carbon coating layer may be included in an amount of about 0.5 wt% to about 3 wt%, or the carbon coating layer may be included in an amount of about 1 wt% to about 2 wt% based on 100 wt% of the second particles. For example, the carbon coating layer may have a higher amount in the first particles than in the second particles.

Second Positive Electrode Active Material

The second positive electrode active material includes a lithium nickel-based composite oxide.

The lithium nickel-based composite oxide may be represented, for example, by Chemical Formula 3.

[Chemical Formula 3] $\quad Li_{a3}Ni_{x3}M^3_{y3}M^4_{z3}O_{2-b3}X_{b3}$

In Chemical Formula 3, $0.9 \le a3 \le 1.2$, $0.8 \le x3 \le 1$, $0 \le y3 \le 0.2$, $0 \le z3 \le 0.2$, $0.9 \le x3+y3+z3 \le 1.1$, and $0 \le b3 \le 0.1$, $M^3$ and $M^4$ are each independently one or more elements selected from Al, B, Ba, Ca, Ce, Co, Cr, Cu, Fe, Mg, Mn, Mo, Nb, Si, Sn, Sr, Ti, V, W, Y, Zn, and Zr, $M^3$ and $M^4$ are different elements, and X is one or more elements selected from F, P, and S.

In Chemical Formula 3, $0.8 \le x3 \le 0.98$, $0.01 \le y3 \le 0.19$, and $0.01 \le z3 \le 0.19$; $0.85 \le x3 \le 0.98$, $0.01 \le y3 \le 0.14$, and $0.01 \le z3 \le 0.14$; or $0.85 \le x3 \le 0.95$, $0.04 \le y3 \le 0.14$, and $0.01 \le z3 \le 0.11$.

The lithium nickel-based composite oxide may be represented by Chemical Formula 4 or Chemical Formula 5 as a specific example.

[Chemical Formula 4]  $\quad Li_{a4}Ni_{x4}Co_{y4}M^5_{z4}O_{2-b4}X_{b4}$

In Chemical Formula 4, $0.9 \leq a4 \leq 1.2$, $0.8 \leq x4 \leq 0.99$, $0.01 \leq y4 \leq 0.2$, $0 \leq z4 \leq 0.19$, $0.9 \leq x4+y4+z4 \leq 1.1$, and $0 \leq b4 \leq 0.1$, $M^4$ is one or more elements selected from Al, B, Ba, Ca, Ce, Cr, Cu, Fe, Mg, Mn, Mo, Nb, Si, Sn, Sr, Ti, V, W, Y, Zn, and Zr, and X is F, P, S, or a combination thereof.

In Chemical Formula 4, $0.8 \leq x4 \leq 0.98$, $0.01 \leq y4 \leq 0.19$, and $0.01 \leq z4 \leq 0.19$; $0.85 \leq x4 \leq 0.98$, $0.01 \leq y4 \leq 0.14$, and $0.01 \leq z4 \leq 0.14$; or $0.85 \leq x4 \leq 0.95$, $0.04 \leq y4 \leq 0.14$, and $0.01 \leq z4 \leq 0.11$.

[Chemical Formula 5]  $\quad Li_{a5}Ni_{x5}Co_{y5}M^6_{z5}M^7_{w5}O_{2-b5}X_{b5}$

In Chemical Formula 5, $0.9 \leq a5 \leq 1.2$, $0.8 \leq x5 \leq 0.98$, $0.01 \leq y5 \leq 0.19$, $0.01 \leq z5 \leq 0.19$, $0 \leq w5 \leq 0.18$, $0.9 \leq x5+y5+z5+w5 \leq 1.1$, and $0 \leq b5 \leq 0.1$, $M^6$ is Al, Mn, or a combination thereof, $M^7$ is one or more elements selected from B, Ba, Ca, Ce, Cr, Cu, Fe, Mg, Mo, Nb, Si, Sn, Sr, Ti, V, W, Y, Zn, and Zr, and X is F, P, S, or a combination thereof.

In Chemical Formula 5, $0.85 \leq x5 \leq 0.98$, $0.01 \leq y5 \leq 0.14$, $0.01 \leq z5 \leq 0.14$, and $0 \leq w5 \leq 0.13$; or $0.85 \leq x5 \leq 0.95$, $0.04 \leq y5 \leq 0.14$, $0.01 \leq z5 \leq 0.11$, and $0 \leq w5 \leq 0.1$.

The lithium nickel-based composite oxide may be a high nickel-based positive electrode active material. For example, in the lithium nickel-based composite oxide (high nickel-based positive electrode active material), a nickel amount based on 100 mol% of the total metal excluding lithium may be greater than or equal to about 80 mol%, for example, greater than or equal to about 85 mol%, or greater than or equal to about 90 mol%, and less than or equal to about 100 mol%, less than or equal to about 99 mol%, less than or equal to about 98 mol%, or less than or equal to about 95 mol%. For example, in the lithium nickel-based composite oxide (high nickel-based positive electrode active material), a nickel amount based on 100 mol% of the total metal excluding lithium may be about 80 mol% to about 100 mol%, about 80 mol% to about 99 mol%, about 80 mol% to about 98 mol%, about 85 mol% to about 98 mol%, or about 85 mol% to about 95 mol%. The high-nickel-based positive electrode active material may achieve high capacity and high performance.

The second positive electrode active material may be in a form of secondary particles in which a plurality of primary particles are agglomerated, in the form of single particles, or in the form of a mixture thereof.

The average particle diameter ($D_{50}$) of the second positive electrode active material may be about 1 $\mu$m to about 20 $\mu$m, or about 3 $\mu$m to about 18 $\mu$m. The average particle diameter ($D_{50}$) of the secondary particles may be about 1 $\mu$m to about 20 $\mu$m, or about 3 $\mu$m to about 18 $\mu$m. The average particle diameter ($D_{50}$) of the primary particles forming the secondary particles may be less than or equal to about 1 $\mu$m, and may be, for example, about 0.1 $\mu$m to about 1 $\mu$m, about 0.2 $\mu$m to about 0.9 $\mu$m, about 0.2 $\mu$m to about 0.8 $\mu$m, or about 0.3 $\mu$m to about 0.6 $\mu$m. The average particle diameter ($D_{50}$) of the e single particles may be about 0.5 $\mu$m to about 8 $\mu$m, or about 1 $\mu$m to about 5 $\mu$m. The average particle diameter ($D_{50}$) of the e single particles may be about 0.5 $\mu$m to about 8 $\mu$m, or about 1 $\mu$m to about 5 $\mu$m. The average particle diameter ($D_{50}$) may be obtained for example by selecting about 20 at random particles from a scanning electron microscope image, measuring their particle sizes (particle diameter, major axis, or major axis length), then obtaining a particle size distribution, and then taking the particle size of particles having a cumulative volume of 50 vol% in the particle size distribution, as the average particle diameter ($D_{50}$).

The second positive electrode active material may include large particles having an average particle diameter ($D_{50}$) of about 9 $\mu$m to about 20 $\mu$m, small particles having an average particle diameter ($D_{50}$) of about 1 $\mu$m to about 9 $\mu$m, or a combination thereof. The large particles may be in the form of secondary particles formed by agglomerating a plurality of primary particles, in the form of single particles, or in the form of a mixture thereof. The small particles may also be in the form of secondary particles, in the form of single particles, or in the form of a mixture thereof. For example, the second positive electrode active material may include large particles and small particles. In this case, the large particles and the small particles may be mixed in a set of weight ratios within a range of about 20:80 to about 95:5. For example, the weigh ratios may be about 30:70 to about 90:10, about 40:60 to about 85:15, or about 50:50 to about 80:20. When the second positive electrode active material contains both large and small particles, this may improve the capacity, energy density, and cycle-life characteristics.

Irreversible Positive Electrode Additive

Some of the Li included in the positive electrode active material may participate in forming a SEI (solid electrolyte interface) film on the negative electrode surface during the charge and discharge, meaning that it is converted to an irreversible Li that no longer participates in the charge and discharge reaction. This may cause a capacity loss problem. The irreversible positive electrode additive is a compound that acts as a sacrificial positive electrode capable of compensating for the irreversible Li, and it may be decomposed during the formation process. This thereby provides Li but not participate in a subsequent charge and discharge process of the Li. Such an irreversible positive electrode additive may be added to replenish the lithium loss, thereby improving energy density, cycle-life, stability, a capacity retention rate, and the like of a battery.

The irreversible positive electrode additive includes a compound serving as a sacrificial positive electrode, such as, for example, Fe-containing oxide, Mn-containing oxide, Co-containing oxide, and the like.

The Fe-containing oxide may be $Li_5FeO_4$, $LiFeO_2$, $LiFe_5O_8$, or a combination thereof. The Mn-containing oxide may include a lithium-rich manganese-based oxide, such as, for example, $Li_6MnO_4$ and the like. The Co-containing oxide may include lithium-rich cobalt-based oxide, such as, for example, $Li_6CoO_4$ and the like.

The irreversible positive electrode additive, according to some example embodiments, may include the Fe-containing oxide. The Fe-containing oxide may exhibit higher electrochemical characteristics than the Mn-containing oxide and may sufficiently play a role of compensating irreversible Li, thereby increasing the utilization rate of the positive electrode active material. In addition, if the Co-containing oxide is used, $Li_6CoO_4$ may be decomposed to form $Li_2O$ and CoO during the charge and discharge, wherein the CoO is dissolved into $Co^{2+}$ in an electrolyte solution, so that Co may be eluted from a negative electrode, thereby deteriorating battery characteristics.

The Fe-containing oxide may be in a form of secondary particles in which a plurality of primary particles is agglomerated. In another example, the Fe-containing oxide may be in the form single particles. In a further example, the Fe-containing oxide may be in the form a mixture thereof.

The Fe-containing oxide may have an average particle diameter ($D_{50}$) of about 0.5 $\mu$m to about 15 $\mu$m. Examples of the average particle diameter ($D_{50}$) include about 1 $\mu$m to about 14 $\mu$m, about 2 $\mu$m to about 13 $\mu$m, about 3 $\mu$m to about 12 $\mu$m, or about 4 $\mu$m to about 10 $\mu$m. If the Fe-containing oxide has an average particle diameter ($D_{50}$) within the ranges, mixture density may be increased in subsequent manufacturing of a positive electrode. The average particle diameter ($D_{50}$) of the Fe-containing oxide may be, for example, obtained by randomly selecting about 30 Fe-containing oxide particles from an electron microscope image of the positive electrode active material, measuring a particle diameter thereof, and taking the particle diameter of particles having 50 vol% of a cumulative volume in a particle distribution thereof as an average particle diameter ($D_{50}$).

The positive electrode active material may have pellet density of about 2.2 g/cc to about 2.4 g/cc. Examples of pellet density may include about 2.2 g/cc to about 2.38 g/cc, about 2.2 g/cc to about 2.35 g/cc, or about 2.2 g/cc to about 2.33 g/cc. The pellet density of the positive electrode active material may be obtained by placing 1.0 g of the positive electrode active material into a mold, pressing it with about 4 tons for about 30 seconds at about 25 °C into a pellet shape, and dividing the mass by the volume of the resulting pellet. If the pellet density of the positive electrode active material is within the range, powder characteristics may be improved. This, in turn may enhance energy density. The weight ratio of the first positive electrode active material to the second positive electrode active material may be controlled to satisfy the pellet density range of the positive electrode active material. An amount of the irreversible positive electrode additive may also be controlled to satisfy the pellet density range of the positive electrode active material.

## Positive Electrode

According an aspect of the invention, a positive electrode includes a positive electrode current collector; and a positive electrode active material layer disposed on the positive electrode current collector, and including the aforementioned positive electrode active material. The positive electrode can improve the overall battery performance by including the aforementioned positive electrode active material. Specifically, the positive electrode may exhibit high capacity, high efficiency, high energy density, and excellent cycle-life characteristics while increasing the operating voltage.

### Positive Electrode Current Collector

The positive electrode current collector is not particularly limited as long as it has conductivity and does not cause a chemical change in the rechargeable lithium battery. The positive electrode current collector may also be an aluminum foil or a stainless steel foil having a thickness of about 10 $\mu$m to about 15 $\mu$m.

### Positive Electrode Active Material Layer

The positive electrode active material layer includes the aforementioned positive electrode active material.

The specific details of the positive electrode active material are as described above.

An amount of the positive electrode active material may be about 60 wt% to about 99.9 wt%, about 70 wt% to about 99.8 wt%, about 80 wt% to about 99 wt%, about 90 wt% to about 98 wt%, about 92 wt% to about 98 wt%, or about 94 wt% to about 98 wt%, or about 96 wt% to about 98 wt% based on 100 wt% of the positive electrode active material layer.

The aforementioned positive electrode active material layer may optionally further include a binder, a conductive material, or a combination thereof.

The binder improves binding properties of a positive electrode active material particles with each other, as well as binding properties of a positive electrode active material particles with a positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is included to provide electrode conductivity. Any electrically conductive material may be used as a conductive material unless it causes a chemical change in the rechargeable lithium battery. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

In the positive electrode active material layer, an amount of the binder may be about 0.1 wt% to about 5 wt%, about 0.5 wt% to about 5 wt%, about 0.5 wt% to about 3 wt%, about 0.5 wt% to about 2 wt%, or about 0.5 wt% to about 1.5 wt% based on 100 wt% of the positive electrode active material layer, and an amount of the conductive material may be about 0.1 wt% to 5 wt%, about 0.5 wt% to about 5 wt%, about 0.5 wt% to about 3 wt%, about 1 wt% to about 3 wt%, or about 1.5 wt% to about 2.5 wt% based on 100 wt% of the positive electrode active material layer.

The density of the positive electrode active material layer may be about 2.2 g/cc to about 2.4 g/cc. Examples of the density may include about 2.2 g/cc to about 2.38 g/cc, about 2.2 g/cc to about 2.35 g/cc, or about 2.2 g/cc to about 2.33 g/cc. When the density of the positive electrode active material layer satisfies the above range, high charge/discharge efficiency (e.g., initial charge/discharge efficiency) may be realized while implementing high capacity per volume. The density of the positive electrode active material layer represents a ratio of the weight to the volume of the positive electrode active material layer in the compressed positive electrode. Specifically, the density of the positive electrode active material layer may be obtained by measuring the cross-sectional area, thickness, and weight of the positive electrode active material layer excluding the positive electrode current collector, calculating the volume by multiplying the cross-sectional area and thickness, and dividing the weight by the volume.

## Rechargeable Lithium Battery

The rechargeable lithium battery, according to an aspect of the invention, includes the aforementioned positive electrode, negative electrode, and electrolyte. The rechargeable lithium battery may include a positive electrode, a negative electrode, a separator between the positive electrode and the negative electrode, and an electrolyte.

A rechargeable lithium battery may have overall improved battery performance by including the aforementioned positive electrode active material. Specifically, the rechargeable lithium battery can exhibit high capacity, high efficiency, high energy density, and excellent cycle-life characteristics while increasing the operating voltage.

For example, when the positive electrode is charged at 0.2 C-rate and discharged at 0.2 C-rate, the initial charge capacity is 165 mAh/g or more, the initial discharge capacity is 153 mAh/g or more, and the initial charge/discharge efficiency is greater than or equal to about 90%. When the charge/discharge is repeated 50 times, the ratio of the 50-cycle discharge capacity to the initial discharge capacity, i.e., the cycle-life, is greater than or equal to about 97%. Furthermore, the energy density may be greater than or equal to about 1200 Wh/L, while ensuring price competitiveness.

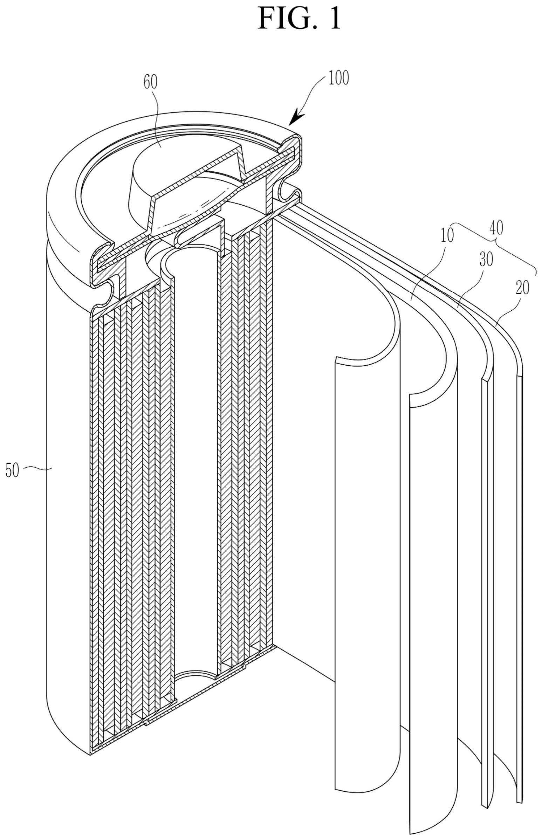

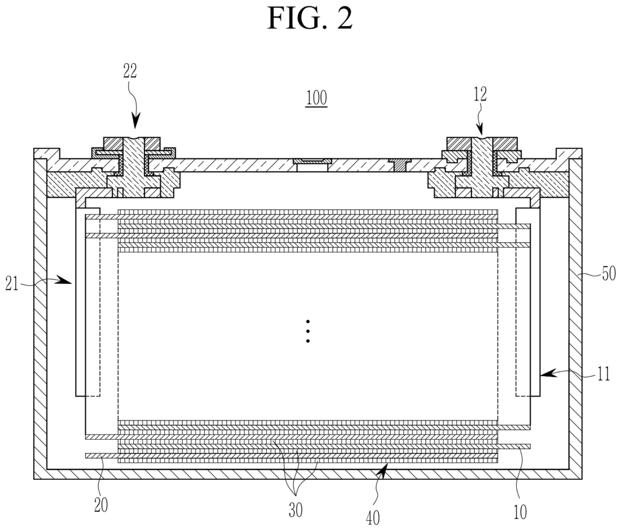

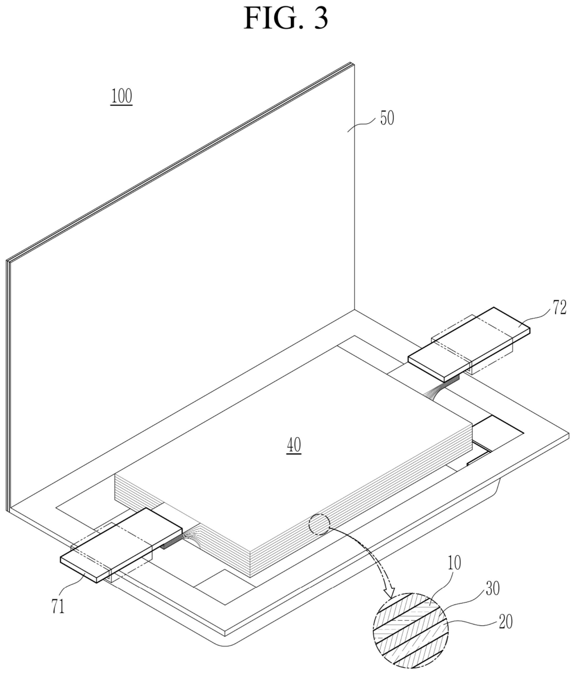

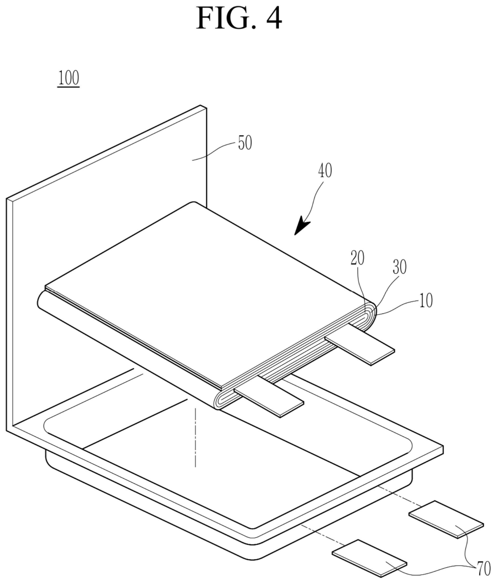

The rechargeable lithium battery may be classified into batteries of a variety of shapes including cylindrical, prismatic, pouch, coin, etc. FIGS. 1 to 4 are schematic diagrams showing the rechargeable lithium battery according to some example embodiments, where FIG. 1 shows a cylindrical battery, FIG. 2 shows a prismatic battery, and FIGS. 3 and 4 show a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

## Negative Electrode

The negative electrode for a rechargeable lithium battery includes a negative electrode current collector and a negative electrode active material layer on the negative electrode current collector. The negative electrode active material layer includes a negative electrode active material, and may optionally further include a binder, a conductive material, or a combination thereof.

The negative electrode current collector is not particularly limited as long as it has conductivity and does not cause a chemical change in the rechargeable lithium battery. The negative electrode current collector may be a copper foil having a thickness of about 10 $\mu$m to about 15 $\mu$m.

The negative electrode active material includes a material capable of reversibly intercalating/deintercalating lithium ions, lithium metal, an alloy of lithium metal, a material capable of doping / dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be irregular, sheet, flake, spherical, fiber-shaped natural graphite or artificial graphite. The amorphous carbon may be a soft carbon, a hard carbon, a mesophase pitch carbonization product, calcined coke, and the like.

Regarding the lithium metal alloy, an alloy of lithium and a selected metal may be used. The selected metal may be selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may be silicon, a silicon-carbon composite, $SiO_x$ ($0<x\leq2$, e.g., $SiO_2$), a Si-Q alloy (wherein Q is an element selected from an alkali metal, an alkaline earth metal, a Group 13 element, a Group 14 element (excluding Si), a Group 15 element, a Group 16 element, a transition metal, a rare earth element, and a combination thereof, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, $SnO_k$ ($0<k\leq2$, e.g., $SnO_2$), a Sn alloy, or a combination thereof.

The silicon-carbon composite may be a composite of silicon and amorphous carbon. The average particle diameter ($D_{50}$) of the silicon-carbon composite particles may be, for example, about 0.5 $\mu$m to about 20 $\mu$m. According to some example embodiments, the silicon-carbon composite may be in the form of silicon particles and amorphous carbon coated on the surface of the silicon particles. In one example, the silicon-carbon composite may include a secondary particle (core) in which silicon primary particles are aggregated and an amorphous carbon coating layer (shell) on the surface of the secondary particle. The amorphous carbon may also be present between the silicon primary particles. In another example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, or a combination thereof. The amorphous carbon may include soft carbon or hard carbon, a mesophase pitch carbonized product, calcined coke, etc.

When the silicon-carbon composite includes silicon and amorphous carbon, an amount of the silicon may be about 10 wt% to about 50 wt%, and an amount of the amorphous carbon may be about 50 wt% to about 90 wt% based on 100 wt% of the silicon-carbon composite. In addition, when the silicon-carbon composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may be present as silicon alone, in the form of a silicon alloy, or in an oxidized form of the silicon. The oxidized form of the silicon may be represented as $SiO_x$ ($0 < x \leq 2$). At this time, the atomic content ratio of Si:O, which indicates the degree of oxidation, may be about 99:1 to about 33:67. In the present specification, as used herein, when a definition is not otherwise provided, an average particle diameter ($D_{50}$) indicates a diameter of particle where an accumulated volume is about 50 volume% in a particle distribution.

The Si-based negative electrode active material and/or Sn-based negative electrode active material may be mixed with the carbon-based negative electrode active material. When using a mixture of a Si-based negative electrode active material and/or a Sn-based negative electrode active material and a carbon-based negative electrode active material, the mixing ratio may be about 1:99 to about 90:10 by weight.

The negative electrode active material may be included in an amount of about 90 wt% to about 99.8 wt%, or about 94 wt% to about 99 wt%, based on 100 wt% of the negative electrode active material layer.

The binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the binder in the negative electrode active material layer, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the binder may be about 0.1 wt% to about 5 wt% based on 100 wt% of the negative electrode active material layer, and an amount of the conductive material may be about 0.1 wt% to about 5 wt% based on 100 wt% of the negative electrode active material layer.

Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include nitriles such as R-CN (wherein R is a C2 to C20 linear, branched, or cyclic hydrocarbon group, and may include a double bond, an aromatic ring, or an ether bond, and the like. The aprotic solvent may further include amides such as dimethylformamide. The aprotic solvent may further include dioxolanes such as 1,3-dioxolane, 1,4-dioxolane, and the like. The aprotic solvent may further include sulfolanes, and the like.

The non-aqueous organic solvent may be used alone or in combination of two or more, and when two or more types are used in combination, the mixing ratio may be appropriately adjusted depending on intended battery performances, which is widely understood by those working in the relevant field.

When using a carbonate-based solvent, a cyclic carbonate and a chain carbonate may be mixed and used. Furthermore, the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt, dissolved in the non-aqueous organic solvent, supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus, excellent performance can be achieved and lithium ions can move effectively.

Separator

Depending on the type of the rechargeable lithium battery, a separator may be present between the positive electrode and the negative electrode. The separator may include a polyethylene separator, a polypropylene separator, a polyvinylidene fluoride separator, or a multilayer film of two or more layers thereof, such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene(for example, TEFLON®), or a copolymer or mixture of two or more thereof.

The porous substrate may have a thickness of about 1 $\mu$m to about 40 $\mu$m. Examples of the thickness may include about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be about 1 nm to about 2000 nm. Examples of the average particle diameter ($D_{50}$) may include about 100 nm to about 1000 nm or about 100 nm to about 700 nm.

The organic material and the inorganic material may be mixed in one coating layer, or a coating layer including an organic material and a coating layer including an inorganic material may be stacked.

A thickness of the coating layer may be about 0.5 $\mu$m to about 20 $\mu$m. Examples of the thickness may include about 1 $\mu$m to about 10 $\mu$m or about 1 $\mu$m to about 5 $\mu$m.

Examples and comparative examples of the present disclosure are described below. However, the following examples are only examples of the present disclosure, and the present disclosure is not limited to the following examples.

**Example 1-1**

**(1) Preparation of Positive Electrode Active Material**

A positive electrode active material was prepared by mixing $LiMn_{0.5}Fe_{0.5}PO_4$, a lithium nickel-based composite oxide ($LiNi_{0.9}Co_{0.08}Al_{0.02}O_2$), and $Li_5FeO_4$. The $LiMn_{0.5}Fe_{0.5}PO_4$ may be in a form of single particles with an average particle diameter ($D_{50}$) of about 600 nm as a first positive electrode active material. The lithium nickel-based composite oxide ($LiNi_{0.9}Co_{0.08}Al_{0.02}O_2$) was a mixture of large particles with an average particle diameter ($D_{50}$) of about 14.7 $\mu$m and small particles with an average particle diameter ($D_{50}$) of about 3 $\mu$m in a weight ratio of 64:36 as a second positive electrode active material. The $Li_5FeO_4$ was in a form of single particles with an average particle diameter ($D_{50}$) of about 10 $\mu$m as an irreversible positive electrode additive. As disclosed herein, the large particles and the small particles of the second positive electrode active material were in a form of single particles.

**(2) Manufacturing of Positive Electrode**

The positive electrode active material, polyvinylidene fluoride as a binder, and carbon nanotube as a conductive material were mixed in a weight ratio of 97:1:2 (= positive electrode active material:binder:conductive material) to prepare a positive electrode active material composition based on 100 wt% of the positive electrode active material composition. The positive electrode active material composition was dispersed in a N-methyl pyrrolidone solvent to prepare a positive electrode active material slurry, which was coated on an Al foil with a thickness of 13.5 $\mu$m and then, dried and compressed, thereby manufacturing a positive electrode.

### (3) Manufacturing of Rechargeable Lithium Battery Cell

A negative electrode active material slurry was prepared by mixing 97.5 wt% of graphite as a negative electrode active material, 1.5 wt% of carboxymethyl cellulose and 1 wt% of styrene butadiene rubber as a binder in distilled water based on the total weight of the negative electrode active material slurry. This negative electrode active material slurry was coated on a 10 $\mu$m-thick Cu foil and then, dried and compressed, thereby manufacturing a negative electrode.

A 10 $\mu$m-thick polyethylene separator was interposed between the positive electrode and the negative electrode to manufacture an electrode assembly, which was inserted into a case, and an electrolyte was injected thereinto, manufacturing a rechargeable lithium battery cell (100 mAh level pouch cell). The electrolyte was prepared by mixing EC (ethylenecarbonate): EMC (ethylmethylcarbonate): DMC (dimethylcarbonate) in a volume ratio of 2:4:4 to obtain a mixed solvent and dissolving 1.15 M $LiPF_6$ in the mixed solvent.

### Examples 1-2 to 2-4 and Comparative Examples 1-1 to 2-2

A positive electrode active material, a positive electrode, and a rechargeable lithium battery cell were manufactured in substantially the same manner as in Example 1-1 except that the first positive electrode active material, the second positive electrode active material, and the irreversible positive electrode additive were mixed as shown in Table 1 in preparing the positive electrode active material. In Table 1, the amount of the irreversible positive electrode additive was calculated based on 100 wt% of the positive electrode active material, and also, the weight ratio (a/b) of the first positive electrode active material (a) to the second positive electrode active material (b) was calculated by dividing the amount of the first positive electrode active material included in the positive electrode active material by the amount of the second positive electrode active material, and the result was rounded up to the second decimal place.

(Table 1)

| | Weight ratio (a/b) of the first positive electrode active material (a) to the second positive electrode active material (b) | Irreversible positive electrode additive (wt%) |
|---|---|---|
| Example 1-1 | 3.98 | 0.5 |
| Example 1-2 | 3.95 | 1 |
| Example 1-3 | 3.93 | 1.5 |
| Comparative Example 1-1 | 3.9 | 2 |
| Comparative Example 1-2 | 3.88 | 2.5 |
| Comparative Example 1-3 | 3.85 | 3 |
| Example 2-1 | 6.07 | 1 |
| Example 2-2 | 4.21 | 1 |
| Example 2-3 | 3.13 | 1 |
| Example 2-4 | 2.41 | 1 |
| Comparative Example 2-1 | 8.9 | 1 |
| Comparative Example 2-2 | 1.02 | 1 |

### Evaluation Examples

### (1) Measurement of Initial Charge/discharge Capacity and Efficiency

The rechargeable lithium battery cells according to Examples 1-1 to 1-3 and Comparative Examples 1-1 to 1-3 were charged to 3.8 V at a constant current of 0.2 C-rate and to 0.05 C at the constant voltage, and discharged to 2.5 V at a constant current of 0.2 C-rate at 25 °C to measure initial charge/discharge capacity (i.e., charge capacity in 1st cycle and discharge capacity in 1st cycle), which was used to calculate initial efficiency according to Equation 1. The results are shown in Table 2. In addition, the rechargeable lithium battery cells according to Examples 2-1 to 2-4 and Comparative Example 2-1 were evaluated for initial charge/discharge capacity under the same conditions as those applied to the rechargeable lithium battery cells according to Examples 1-1 to 1-3 and Comparative Examples 1-1 to 1-3, and the results are shown in Table 3 below. Meanwhile, Comparative Example 2-2 exhibited cycle life characteristics that did not meet the required level for commercial lithium rechargeable batteries (e.g., ≥95%), and thus was not suitable for practical application. Accordingly, the initial charge/discharge capacity data of Comparative Example 2-2 were omitted, as they have no substantive technical significance for evaluation.

Initial efficiency (%) = [Discharge capacity in $1^{st}$ cycle/Charge capacity in $1^{st}$ cycle] $\times$ 100%     [Equation 1]

**(2) Average Voltage Measurement**

The rechargeable lithium battery cells of Examples 1-1 to 1-3 and Comparative Examples 1-1 to 1-3 were measured with respect to average voltages at SOC (State Of Charge) 50% during the initial discharge, in which the average voltage was obtained by integrating an area under a discharge voltage curve (a voltage-capacity graph) after the initial charging and discharging of the cells and then dividing the integral by discharge capacity, and the results are shown in Table 2. In addition, the rechargeable lithium battery cells according to Examples 2-1 to 2-4 and Comparative Example 2-1 were measured with respect to average voltages under the same conditions as those applied to the rechargeable lithium battery cells according to Examples 1-1 to 1-3 and Comparative Examples 1-1 to 1-3, and the results are shown in Table 3 below. Meanwhile, Comparative Example 2-2 exhibited cycle life characteristics that did not meet the required level for commercial lithium rechargeable batteries (e.g., ≥95%), and thus was not suitable for practical application. Accordingly, the average voltage data of Comparative Example 2-2 were omitted, as they have no substantive technical significance for evaluation.

**(3) Cycle-life Characteristics**

The rechargeable lithium battery cells of Examples 1-1 to 1-3, and Comparative Examples 1-1 to 1-3 were subjected to the initial charge and discharge, and then repeatedly charged to 3.8 V at a constant current of 0.2 C-rate and discharged to 2.5 V at a constant current of 0.2 C-rate at 25 °C for 50 cycles or more, and then, a ratio (cycle-life) of $50^{th}$ cycle discharge capacity (discharge capacity at $50^{th}$ cycle) to the initial discharge capacity (discharge capacity at $1^{st}$ cycle) was calculated according to Equation 2 and then, shown in Table 2. In addition, the rechargeable lithium battery cells according to Examples 2-1 to 2-4 and Comparative Example 2-1 were evaluated for the 50th cycle discharge capacity under the same conditions as those applied to the rechargeable lithium battery cells according to Examples 1-1 to 1-3 and Comparative Examples 1-1 to 1-3. The rechargeable lithium battery cells according to Examples 2-1 to 2-4 and Comparative Example 2-1 exhibited cycle life characteristics satisfying the required level for commercial lithium rechargeable batteries (e.g., ≥95%), whereas Comparative Example 2-2 exhibited cycle life characteristics that did not meet the required level for commercial lithium rechargeable batteries (e.g., ≥95%) and thus was not suitable for practical application. Accordingly, Comparative Example 2-2 was omitted from Table 3 below.

Cycle-life [%] = [Discharge capacity at $50^{th}$ cycle/Discharge capacity at $1^{st}$ cycle] $\times$ 100%     [Equation 2]

**(4) Pellet Density Measurement**

Each of the positive electrode active materials (1.0 g each) of Examples 1-1 to 2-4 and Comparative Examples 1-1 to 2-1 was put into a mold and then, pressed with 4 tons for 30 seconds at 25 °C into a positive electrode active material pellet. The pellet density was calculated by mass per volume, and the results are shown in Tables 2 and 3. Meanwhile, Comparative Example 2-2 exhibited cycle life characteristics that did not meet the required level for commercial lithium rechargeable batteries (e.g., ≥95%), and thus was not suitable for practical application. Accordingly, the pellet density data of Comparative Example 2-2 were omitted, as they have no substantive technical significance for technical evaluation.

**(5) Energy Density Measurement**

The rechargeable lithium battery cells of Examples 1-1 to 2-1 and Comparative Examples 1-1 to 2-2 were relatively evaluated with respect to energy density per volume (capacity $\times$ average voltage / volume = AhV/L =Wh/L) by a volume difference, and the results are shown in Tables 2 and 3. Meanwhile, Comparative Example 2-2 exhibited cycle life characteristics that did not meet the required level for commercial lithium rechargeable batteries (e.g., ≥95%), and thus was not suitable for practical application. Accordingly, the energy density data of Comparative Example 2-2 were omitted, as they have no substantive technical significance for technical evaluation.

(Table 2)

| | Initial charge/discharge | | | Aver age volt age (V) | Cycl e- life (%, @50 cy) | Pellet density (g/cc) | Energy density (Wh/L) |
|---|---|---|---|---|---|---|---|
| | 0.2 C charge capacity (mAh/g) | 0.2 C discharge capacity (mAh/g) | initial charge e/disc harge efficie ncy (%) | | | | |
| Ex. 1-1 | 170.7 | 157.2 | 92.1 | 3.6 | 98.5 | 2.29 | 1303 |
| Ex. 1-2 | 174.6 | 159.9 | 91.5 | 3.6 | 98.1 | 2.24 | 1272 |
| Ex. 1-3 | 176.1 | 159.6 | 90.6 | 3.6 | 98.1 | 2.20 | 1262 |
| Comp. Ex. 1-1 | 187.3 | 164.1 | 87.6 | 3.6 | 97. | 2.16 | 1276 |
| Comp. Ex. 1-2 | 189.8 | 165.1 | 87.0 | 3.6 | 97.2 | 2.12 | 1260 |
| Comp. Ex. 1-3 | 193.2 | 167.3 | 86.6 | 3.6 | 97.3 | 2.08 | 1253 |

(Table 3)

| | 0.2 C charge capacity (mAh/g) | 0.2 C discharge capacity (mAh/g) | Average voltage (V) | Pellet density (g/cc) | Energy density (Wh/L) |
|---|---|---|---|---|---|
| Ex. 2-1 | 170.7 | 156.7 | 3.59 | 2.2 | 1206 |
| Ex. 2-2 | 174.4 | 159.8 | 3.6 | 2.22 | 1258 |
| Ex. 2-3 | 178.2 | 162.7 | 3.61 | 2.28 | 1311 |
| Ex. 2-4 | 180.9 | 164.9 | 3.62 | 2.33 | 1370 |
| Comp. Ex. 2-1 | 164.2 | 152.1 | 3.56 | 2.14 | 1158 |

## Conclusion

Examples 1-1 to 1-3 and Comparative Examples 1-1 to 1-3 were prepared by fixing the weight ratio (a/b) of the first positive electrode active material (a) to the second positive electrode active material (b) at a level of about 4, specifically in a range of 3.85 to 3.98, which may be regarded as approximately 4 when taking into account an error range ($\pm 0.2$), and varying the weight percentage of the irreversible positive electrode additive to prepare the positive electrode active material.

In addition, Table 3 below shows that Examples 2-1 to 2-4 and Comparative Examples 2-1 to 2-2 were prepared by fixing the content of the irreversible positive electrode additive at 1 wt% and varying the weight ratio (a/b) of the first positive electrode active material (a) to the second positive electrode active material (b) to prepare the positive electrode active material.

Referring to Tables 1 and 2, the rechargeable lithium battery cells of Examples 1-1 to 1-3 include 0.5 wt% to 1.5 wt% of the irreversible positive electrode additive based on 100 wt% of the positive electrode active material and the rechargeable lithium battery cells of Comparative Examples 1-1 to 1-3 include an excessive amount of the irreversible positive electrode additive. When the weight ratio (a/b) of the first positive electrode active material (a) to the second positive electrode active material (b) was fixed to about 4, within an experimental error range ($\pm 0.2$), the rechargeable lithium battery cells of Examples 1-1 to 1-3, compared to the rechargeable lithium battery cells of Comparative Examples 1-1 to 1-3, were confirmed to exhibit excellent efficiency and equivalent or improved energy density.

Through this, it was confirmed that the larger the weight of the irreversible positive electrode additive, the less the weight of the first and second positive electrode active materials, thereby resulting in deteriorating efficiency and energy density. A weight of the irreversible positive electrode additive may be adjusted within an appropriate range, thereby providing a rechargeable lithium battery with excellent initial charge/discharge capacity, efficiency, cycle-life characteristics, and energy density.

Referring to Tables 1 and 3, when the amount of the irreversible positive electrode additive was fixed to 1 wt% based on 100 wt% of the positive electrode active material, the rechargeable lithium battery cells of Examples 2-1 to 2-4 were confirmed to exhibit excellent initial charge/discharge capacity, average voltage, pallet density, and energy density.

On the other hand, when the amount of the irreversible positive electrode additive was fixed to 1 wt% based on 100 wt% of the positive electrode active material, the rechargeable lithium battery cells of Examples 2-1 to 2-4, compared to that of Comparative Example 2-1 including the first positive electrode active material (a) to the second positive electrode active material (b) in a weight ratio (a/b) of less than 2, were confirmed to exhibit excellent initial charge/discharge efficiency, average voltage, pallet density, and energy density.

In addition, when the content of the irreversible positive electrode additive was fixed to 1 wt% based on 100 wt% of the positive electrode active material, Comparative Example 2-2, in which the weight ratio (a/b) of the first positive electrode active material (a) to the second positive electrode active material (b) was less than 1.5, was not suitable for practical application, since, as described above, its cycle life characteristics did not meet the required level for commercial lithium rechargeable batteries (e.g., ≥95%). Furthermore, Comparative Example 2-2 included an excessive amount of the second positive electrode active material, which is more expensive than that included in Examples 2-1 to 2-4, and thus may hinder securing price competitiveness.

Through this, it was confirmed that, when the weight of the irreversible positive electrode additive was fixed and only the weight ratio of the first positive electrode active material to the second positive electrode active material was adjusted, an excessively high content of the second positive electrode active material resulted in cycle life characteristics that did not meet the required level for commercial lithium rechargeable batteries (e.g., ≥95%). On the other hand, when the first positive electrode active material was included in an excessively high amount, the cycle life characteristics satisfied the requirements for commercial lithium rechargeable batteries, but the initial charge/discharge capacity, average voltage, pellet density, and energy density were generally deteriorated. Accordingly, by adjusting the weight ratio (a/b) of the first positive electrode active material (a) to the second positive electrode active material (b) within an appropriate range, it is possible to provide a lithium rechargeable battery that satisfies the cycle life characteristics required for commercial lithium rechargeable batteries while simultaneously exhibiting excellent initial charge/discharge capacity, average voltage, pellet density, and energy density.

While this disclosure has been described in connection with what is presently considered to be practical example embodiments, it is to be understood that the disclosure is not limited to the disclosed embodiments, but, on the contrary, is intended to cover various modifications and equivalent arrangements included within the scope of the appended claims.

**<Description of Symbols>**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material comprising

   a first positive electrode active material comprising a lithium iron phosphate-based compound,
   a second positive electrode active material comprising a lithium nickel based composite oxide, and
   an irreversible positive electrode additive,
   wherein a weight ratio (a/b) of the first positive electrode active material (a) to the second positive electrode active material (b) is 1.5 to 8.5, and
   wherein the irreversible positive electrode additive is included in an amount of 0.1 wt% to 1.9 wt% based on 100 wt% of the positive electrode active material.

2. The positive electrode active material as claimed in claim 1, wherein the lithium iron phosphate-based compound is represented by Chemical Formula 1 or Chemical Formula 2,

   wherein Chemical Formula 1 is:

   $$Li_{a1}Fe_{(1-x1)}M^1_{x1}PO_4$$

wherein $0.9 \leq a1 \leq 1.5$, $0 \leq x1 \leq 0.4$, and $M^1$ is Al, Ca, Ce, Cr, Cu, La, Mg, Mn, Mo, Nb, Ni, Sn, Sr, Ti, V, W, Y, Zn, Zr, or a combination thereof, and
wherein Chemical Formula 2 is:

$$Li_{a2}Mn_{x2}Fe_{(1-x2-y2)}M^2{}_{y2}PO_4$$

wherein $0.9 \leq a2 \leq 1.5$, $0.1 \leq x2 \leq 0.9$, $0 \leq y2 < 0.9$, and $M^2$ is Al, Ca, Ce, Cr, Cu, La, Mg, Mo, Nb, Ni, Sn, Sr, Ti, V, W, Y, Zn, Zr, or a combination thereof.

3. The positive electrode active material as claimed in claim 1 or 2, wherein the lithium iron phosphate-based compound comprises $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

4. The positive electrode active material as claimed in any of the preceding claims, wherein the first positive electrode active material is in a form of first particles, second particles, or a mixture thereof,

   wherein the first particles are in a form of secondary particles having an average particle diameter ($D_{50}$) of 5 $\mu$m to 20 $\mu$m, with the secondary particles being formed by agglomerating a plurality of primary particles having an average particle diameter ($D_{50}$) of 0.1 $\mu$m to 2 $\mu$m, and
   wherein the second particles are in a form of single particles having an average particle diameter ($D_{50}$) of 100 nm to 7 $\mu$m.

5. The positive electrode active material as claimed in claim 4, wherein the first positive electrode active material is composed of the second particles.

6. The positive electrode active material as claimed in any of the preceding claims, wherein the lithium nickel-based composite oxide is represented by Chemical Formula 3:

$$Li_{a3}Ni_{x3}M^3{}_{y3}M^4{}_{z3}O_{2-b3}X_{b3}$$

   wherein $0.9 \leq a3 \leq 1.2$, $0.8 \leq x3 \leq 1$, $0 \leq y3 \leq 0.2$, $0 \leq z3 \leq 0.2$, $0.9 \leq x3+y3+z3 \leq 1.1$, and $0 \leq b3 \leq 0.1$, $M^3$ and $M^4$ are each independently one or more of Al, B, Ba, Ca, Ce, Co, Cr, Cu, Fe, Mg, Mn, Mo, Nb, Si, Sn, Sr, Ti, V, W, Y, Zn, and Zr, $M^3$ and $M^4$ are different elements, and X is one or more of F, P, and S.

7. The positive electrode active material as claimed in any of the preceding claims, wherein in the lithium nickel-based composite oxide, an amount of nickel is greater than or equal to 80 mol% based on 100 mol% of a total metal excluding lithium.

8. The positive electrode active material as claimed in any of the preceding claims, wherein the second positive electrode active material comprises large particles having an average particle diameter ($D_{50}$) of 9 $\mu$m to 20 $\mu$m, small particles having an average particle diameter ($D_{50}$) of 1 $\mu$m to 9 $\mu$m, or a combination of the large particles and the small particles.

9. The positive electrode active material as claimed in claim 8, wherein a weight ratio of the large particles and small particles is 20:80 to 95:5.

10. The positive electrode active material as claimed in any of the preceding claims, wherein the irreversible positive electrode additive comprises $Li_5FeO_4$, $LiFeO_2$, $LiFe_5O_8$, or a combination thereof.

11. The positive electrode active material as claimed in any of the preceding claims, wherein the irreversible positive electrode additive is in a form of single particles having an average particle diameter ($D_{50}$) of 0.5 $\mu$m to 15 $\mu$m.

12. The positive electrode active material as claimed in any of the preceding claims, wherein the positive electrode active material has a pellet density of 2.2 g/cc to 2.4 g/cc.

13. A positive electrode, comprising:

   a positive electrode current collector; and

a positive electrode active material layer disposed on the positive electrode current collector, the positive electrode active material layer comprising the positive electrode active material as claimed in any one of claims 1 to 12.

14. The positive electrode as claimed in claim 13, wherein the positive electrode active material layer further comprises a binder, a conductive material, or a combination thereof.

15. A rechargeable lithium battery comprising:

the positive electrode as claimed in claim 13 or 14;
a negative electrode; and
an electrolyte.

# FIG. 1

# FIG. 2

# FIG. 3

# FIG. 4

## EUROPEAN SEARCH REPORT

**Application Number**

EP 25 22 5719

## DOCUMENTS CONSIDERED TO BE RELEVANT

| Category | Citation of document with indication, where appropriate, of relevant passages | Relevant to claim |
|---|---|---|
| Y | EP 2 498 323 A2 (SAMSUNG SDI CO LTD [KR]) 12 September 2012 (2012-09-12) * claims 1-15 * * examples 4, 5, 9, 10 * * paragraph [0006] - paragraph [0094] * ----- | 1-15 |
| Y | EP 4 203 133 A1 (CONTEMPORARY AMPEREX TECHNOLOGY CO LTD [CN]) 28 June 2023 (2023-06-28) * paragraph [0003] - paragraph [0089] * ----- | 1-15 |
| X | CN 118 099 545 A (SHANGHAI LANJUN NEW ENERGY TECHNOLOGY CO LTD) 28 May 2024 (2024-05-28) * claims 1-10 * * paragraph [0007] - paragraph [0070] * ----- | 1-15 |

**CLASSIFICATION OF THE APPLICATION (IPC)**

INV.
H01M4/131
C01G53/04
H01M4/36
H01M4/525
H01M4/58
H01M10/0525
H01M4/136

**TECHNICAL FIELDS SEARCHED (IPC)**

H01M
C01D
C01G

The present search report has been drawn up for all claims

| Place of search | Date of completion of the search | Examiner |
|---|---|---|
| The Hague | 30 April 2026 | Yu, Qianqian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 5719

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2026

| Patent document cited in search report | | Publication date | Patent family member(s) | | Publication date |
|---|---|---|---|---|---|
| EP 2498323 | A2 | 12-09-2012 | CN | 102683696 A | 19-09-2012 |
| | | | CN | 106816577 A | 09-06-2017 |
| | | | EP | 2498323 A2 | 12-09-2012 |
| | | | JP | 6236197 B2 | 22-11-2017 |
| | | | JP | 2012190786 A | 04-10-2012 |
| | | | KR | 20120104484 A | 21-09-2012 |
| | | | US | 2012231341 A1 | 13-09-2012 |
| EP 4203133 | A1 | 28-06-2023 | CN | 116830336 A | 29-09-2023 |
| | | | EP | 4203133 A1 | 28-06-2023 |
| | | | JP | 7514327 B2 | 10-07-2024 |
| | | | JP | 2024500003 A | 04-01-2024 |
| | | | KR | 20230062476 A | 09-05-2023 |
| | | | KR | 20260022489 A | 19-02-2026 |
| | | | US | 2023139006 A1 | 04-05-2023 |
| | | | WO | 2023070516 A1 | 04-05-2023 |
| CN 118099545 | A | 28-05-2024 | CN | 118099545 A | 28-05-2024 |
| | | | CN | 118969963 A | 15-11-2024 |
| | | | EP | 4723190 A1 | 08-04-2026 |
| | | | KR | 20260028846 A | 04-03-2026 |
| | | | US | 20260121021 A1 | 30-04-2026 |
| | | | WO | 2025218067 A1 | 23-10-2025 |

EPO FORM P0459

For more details about this annex : see Official Journal of the European Patent Office, No. 12/82